Europäisches Patentamt

European Patent Office

Office européen des brevets

(11) Veröffentlichungsnummer: **0 381 926**

**A2**

(12) # EUROPÄISCHE PATENTANMELDUNG

(21) Anmeldenummer: **90100278.2**

(51) Int. Cl.⁵: **B60D 1/44, A01D 90/12**

(22) Anmeldetag: **08.01.90**

(30) Priorität: **02.02.89 DE 8901129 U**

(43) Veröffentlichungstag der Anmeldung:
**16.08.90 Patentblatt 90/33**

(84) Benannte Vertragsstaaten:
**AT CH DE DK FR IT LI**

(71) Anmelder: **Maschinenfabrik Rau GmbH**
**Johannes-Rau-Strasse**
**D-7315 Weilheim(DE)**

Anmelder: **Rau, Wolfgang, Dr.-Ing.**
**Karlstrasse 24**
**D-7311 Holzmaden(DE)**

(72) Erfinder: **Rau, Willy**
**Beethovenstrasse 7**
**D-7312 Kirchheim-Teck(DE)**
Erfinder: **Rau, Wolfgang, Dr. Ing.**
**Karlstrasse 24**
**D-7311 Holzmaden(DE)**
Erfinder: **Taus, Christian**
**Galgenberg 19**
**D-7312 Kirchheim-Teck(DE)**

(74) Vertreter: **Manitz, Gerhart, Dr. Dipl.-Phys. et al**
**MANITZ, FINSTERWALD & ROTERMUND**
**Seelbergstrasse 23/25**
**D-7000 Stuttgart 50(DE)**

(54) **Kupplungsvorrichtung zum Ankuppeln geschleppter Geräte bzw. Fahrzeuge, insbesondere solcher für die Landwirtschaft.**

(57) Das geschleppte Gerät bzw. Fahrzeug besitzt eine Deichsel (4,5) mit einem U- bzw. V-förmigen vorderen Teil (5), welcher mit dem hinteren Teil (4) um eine Längs- sowie eine Hochachse (L,H) drehbar verbunden ist. Die U- bzw. V-Schenkel sind um eine Querachse (U) schwenkbar mit Anschlußpunkten bzw. Lenkern (6) am Zugfahrzeug verbindbar. Diese Verbindung ist so ausgestaltet, daß sich der vordere Teil (5) der Deichsel relativ zum Zugfahrzeug um eine Hochachse schwenken läßt, um die Gelenkverbindung zwischen den Deichselteilen (4,5) in Querrichtung zu verstellen. Damit läßt sich das geschleppte Gerät bzw. Fahrzeug auch in Kurven sowie auf seitwärts abfallendem, rutschigem Gelände genau in der Fahrgasse des Zugfahrzeuges führen.

*Fig. 2*

# Kupplungsvorrichtung zum Ankuppeln geschleppter Geräte bzw. Fahrzeuge, insbesondere solcher für die Landwirtschaft

Die Erfindung betrifft eine Kupplungsvorrichtung zum Ankuppeln geschleppter Geräte bzw. Fahrzeuge - insbesondere solcher für die Landwirtschaft, wie z.B. Feldspritzen -an Zugfahrzeuge bzw. Schlepper, mit einer zwischen Zugfahrzeug bzw. Schlepper und geschlepptem Gerät bzw. Fahrzeug angeordneten Deichsel, welche relativ zum Zugfahrzeug in Querrichtung verstellbar ist.

Derartige Kupplungsanordnungen sind grundsätzlich bekannt.

Im DE-GM 19 33 963 sowie im DE-GM 83 15 324 werden Anordnungen beschrieben, bei denen eine zugfahrzeugseitige Kupplung, in die eine anhängerseitige Deichsel eingehängt werden kann, am Zugfahrzeug querverstellbar angeordnet ist.

Darüber hinaus werden im DE-GM 19 34 459 sowie in der DE-OS 29 12 715 und der US-PS 28 16 777 Konstruktionen gezeigt, bei denen das Zuggestänge bzw. die Zugöse des geschleppten Fahrzeuges oder Gerätes relativ zum geschleppten Fahrzeug bzw. Gerät querverstellbar angeordnet ist.

Alle oben angegebenen Druckschriften stehen in erster Linie im Zusammenhang mit Erntewagen bzw. Erntemaschinen, welche bei der Arbeit auf einer zum Zugfahrzeug seitlich versetzten Bahn geführt werden sollen, wobei in der Regel ein großer Versatz erwünscht ist. Dementsprechend sind die dargestellten Anordnungen vergleichsweise aufwendig.

Bei der Überfahrt über landwirtschaftliche Flächen sollen die Fahrzeuge möglichst wenig Spuren bzw. Zerstörungen hinterlassen. Um dies zu gewährleisten, ist es beispielsweise bei Feldspritzen und ähnlichen geschleppten Geräten bekannt, ein Fahrwerk mit veränderbarer Spurbreite zu verwenden, um zu ermöglichen, daß die Räder der Feldspritze möglichst genau in den von den Rädern des Zugfahrzeuges bzw. Schleppers hinterlassenen Spuren laufen. Bei Kurvenfahrt und insbesondere auf seitwärts abfallendem Gelände bleibt es jedoch gleichwohl unvermeidbar, daß die Räder des geschleppten Fahrzeuges bzw. Gerätes außerhalb der Spuren des Zugfahrzeuges bzw. Schleppers laufen. Stärkeres Gefälle in Seitwärtsrichtung führt auf weichen bzw. rutschigen Böden dazu, daß das geschleppte Fahrzeug bzw. Gerät in Gefällerichtung zur Seite driftet.In ähnlicher Weise weicht das geschleppte Fahrzeug bzw. Gerät bei Kurvenfahrt in der Regel zur Kurveninnenseite hin aus.

Grundsätzlich ist es zwar möglich, die eingangs erwähnten bekannten Kupplungsanordnungen, welche es ermöglichen, das vom Zugfahrzeug bzw. Schlepper gezogene Gerät bzw. Fahrzeug relativ zum Zugfahrzeug bzw. Schlepper seitwärts versetzt zu führen, auch dazu zu verwenden, das geschleppte Fahrzeug bzw. Gerät in Kurven oder bei seitwärts gerichtetem Gefälle möglichst spurgetreu in der Spur des Spurfahrzeuges bzw. Schleppers zu führen. Jedoch sind die oben dargestellten bekannten Konstruktionen für diesen Zweck wenig geeignet und zu aufwendig.

Deshalb ist es Aufgabe der Erfindung, eine Kupplungsanordnung zu schaffen, welche sich durch einfache Konstruktion auszeichnet und bei guter Handhabbarkeit die Möglichkeit bietet, ein geschlepptes Fahrzeug bzw. Gerät sowohl bei Kurvenfahrt als auch bei Seitwärtsgefälle und rutschigem Boden innerhalb der Fahrgasse des schleppenden Fahrzeuges zu führen.

Diese Aufgabe wird erfindungsgemäß dadurch gelöst, daß die Deichsel einen vorderen, in Draufsicht U- bzw. V-förmigen Teil besitzt, welcher mit einem am geschleppten Fahrzeug bzw. Gerät angeordneten hinteren Teil um eine Längs- sowie eine Hochachse drehbar verbunden ist und dessen U- bzw. V-Schenkel um eine Querachse schwenkbar mit Anschlußpunkten des Zugfahrzeuges bzw. Schleppers kuppelbar sind, und daß zumindest einer der deichselseitigen Gegenanschlußpunkte in Längsrichtung verstellbar ist.

Aufgrund der in Längsrichtung verstellbaren Anordnung des deichselseitigen Gegenanschlußpunktes läßt sich der U- bzw. V-förmige vordere Teil der Deichsel jederzeit relativ zum Zugfahrzeug bzw. Schlepper relativ zu einer vertikalen Achse verschwenken, derart, daß die gelenkige Verbindung zwischen dem U- bzw. V-förmigen vorderen Deichselteil und dem hinteren Teil der Deichsel relativ zum Zugfahrzeug bzw. Schlepper in Seitwärtsrichtung bewegt wird. Damit kann ein Seitwärtsdriften des geschleppten Fahrzeuges bzw. Gerätes jederzeit kompensiert werden.

Zweckmäßigerweise ist vorgesehen, daß der verstellbare Gegenanschlußpunkt der Deichsel vom Fahrerplatz des Zugfahrzeuges bzw. Schleppers aus fernsteuerbar ist, um die Bedienung weitestgehend zu erleichtern.

Vorzugsweise sind beide deichselseitigen Gegenanschlußpunkte verstellbar und miteinander gegenläufig gekoppelt, so daß sich die Deichsel bei Zugbeanspruchung in eine Mittellage zu stellen sucht.

Die deichselseitigen Gegenanschlußpunkte können an Hebelarmen angeordnet sein, die an den zugfahrzeugseitigen Enden des vorderen Deichselteiles um Querachsen schwenkverstellbar angeordnet sind. Die Hebelarme können über an ihnen angelenkte Stangen mit einem doppelarmigen Hebel verbunden sein, welche im Verbindungsbereich der U- bzw. V-Schenkel des vorderen Deichselteiles angeordnet ist. Auf diese Weise wird in konstruktiv besonders einfacher Weise eine gegenläufige Kopplung der Gegenanschlußpunkte an der Deichsel gewährleistet; darüber hinaus ist vorteilhaft, daß diese Konstruktion gegen Verschmutzung besonders unempfindlich ist. Der doppelarmige Hebel kann mittels eines doppeltwirkenden Kolben-Zylinder-Aggregates verstellt werden, welches vom Zugfahrzeug bzw. Schlepper aus steuerbar und mit Druckmedium belieferbar ist.

Im übrigen wird hinsichtlich bevorzugter Merkmale der Erfindung auf die Ansprüche sowie die nachfolgende Erläuterung einer besonders bevorzugten Ausführungsform der Erfindung anhand der Zeichnung verwiesen.

Dabei zeigt

Fig. 1 eine Seitenansicht einer Feldspritze mit erfindungsgemäßer Kupplungsvorrichtung,

Fig. 2 eine ausschnittsweise Draufsicht auf die Feldspritze und insbesondere die Kupplungsvorrichtung,

Fig. 3 eine Draufsicht auf eine Anzeigevorrichtung für die jeweils eingestellte Lage und

Fig. 4 eine Seitenansicht entsprechend dem Pfeil IV in Fig. 3.

Das insgesamt mit 1 bezeichnete Feldspritzengerät besitzt ein einachsiges Fahrwerk, vorzugsweise mit Spurverstellung, derart, daß die Spurweite der Räder 2 der Spurweite eines nicht dargestellten Zugfahrzeuges bzw. Schleppers angepaßt werden kann.

Am Fahrwerksrahmen 3 des Feldspritzgerätes 1 ist ein hinteres Deichselteil 4 fest angeordnet, welches mit einem vorderen, in Draufsicht im wesentlichen V-förmigen Deichselteil 5 um eine Längsachse L sowie um eine Hochachse H gelenkig verbunden ist. Die Spreizung des vorderen Deichselteiles 5 ist derart bemessen, daß sich die Vorderenden der V-Schenkel mit den nur schematisch dargestellten Unterlenkern 6 eines am Zugfahrzeug bzw. Schlepper heckseitig angeordneten Dreipunktgestänges od.dgl. kuppeln lassen. Dazu sind an den Unterlenkern 6 nicht dargestellte Klauen od.dgl. als Kupplungselemente angeordnet, die mit zapfenförmigen Gegenkupplungselementen 7 formschlüssig verbindbar sind, derart, daß das vordere Deichselteil 5 relativ zum Zugfahrzeug bzw. Schlepper um eine Querachse Q schwenkbar gehaltert ist.

Die zapfenförmigen Gegenkupplungselemente 7 sind an Hebelarmen 8 angeordnet, welche ihrerseits an den vorderen Enden der V-Schenkel des vorderen Deichselteiles 5 um Querachsen 9 schwenkbar gelagert sind. An den Hebelarmen 8 sind an bzw. nahe den zapfenförmigen Gegenkupplungselementen 7 Zug- und Schubstangen 10 angelenkt, welche mit ihren von den Hebelarmen 8 entfernten Enden mit einem doppelarmigen Hebel 11 gelenkig verbunden sind, welcher im Verbindungsbereich der V-Schenkel des vorderen Deichselteiles 5 um eine vertikale Achse 12 drehbar gelagert ist. Zwischen einem Arm des Hebels 11 und einem am vorderen Deichselteil 5 fest angeordneten Widerlager 13 ist ein doppeltwirkendes hydraulisches (gegebenenfalls auch pneumatisches) Kolben-Zylinder-Aggregat 14 angeordnet, welches vom Zugfahrzeug bzw. Schlepper aus fernsteuerbar und mit Druckmedium belieferbar ist.

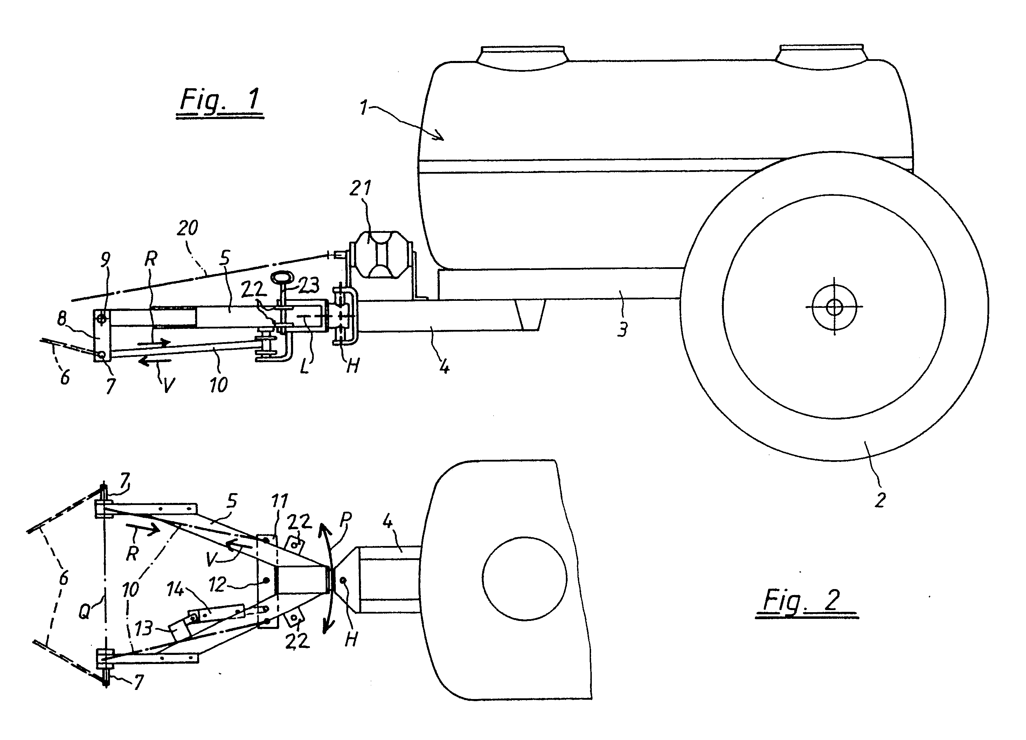

Mittels des Kolben-Zylinder-Aggregates 14 läßt sich der doppelarmige Hebel 11 aus seiner dargestellten Mittellage verschwenken, wobei die eine Stange 10 in Fig. 2 in Pfeilrichtung R und die andere Stange 10 in Pfeilrichtung V bewegt wird, so daß der eine Hebelarm 8 im Uhrzeigersinn und der andere Hebelarm 8 entgegen dem Uhrzeigersinn verschwenkt werden. Dies ist gleichbedeutend damit, daß relativ zum vorderen Deichselteil 5 ein zapfenförmiges Gegenkupplungselement 7 in Pfeilrichtung R verstellt wird, während sich das andere Gegenkupplungselement 7 in Pfeilrichtung V verlagert. Damit erfolgt zwangsläufig eine Schwenkung des vorderen Deichselteiles 5 nach rechts oder links entsprechend dem Doppelpfeil P. Diese Schwenkung führt dazu, daß das Feldspritzgerät 1 relativ zum Zugfahrzeug bzw. Schlepper bei der Fahrt zur einen oder anderen Seite hin gedrängt wird.

Sollte also das Feldspritzgerät 1 aufgrund eines quer zur Fahrtrichtung gerichteten Gefälles des Untergrundes mehr oder weniger stark in Gefällerichtung rutschen, so kann diese Driftbewegung kompensiert werden, indem das vordere Deichselteil 5 durch Betätigung des Kolben-Zylinder-Aggregates 14 eine entsprechende Schwenkbewegung ausführt.

Bei der in den Figuren 1 und 2 dargestellten Ausführungsform der Erfindung nehmen die Hebel 8 in ihrer Normallage eine relativ zum vorderen Deichselteil 5 vertikal nach unten gerichtete Lage ein.

Grundsätzlich sind auch solche Ausführungsformen denkbar, bei denen die Hebel 8 in Normallage nach oben gerichtet sind, so daß die zapfenförmigen Gegenkupplungselemente 7 oberhalb der Ebene des vorderen Deichselteiles 5 angeordnet sind. In der Regel wird die in den Figuren 1 und 2 dargestellte Anordnung verwendet, wenn der Fahrwerksrahmen 3 und damit die vorderen und hinteren Deichselteile 4 und 5 mit größerem Bodenabstand angeordnet sind.

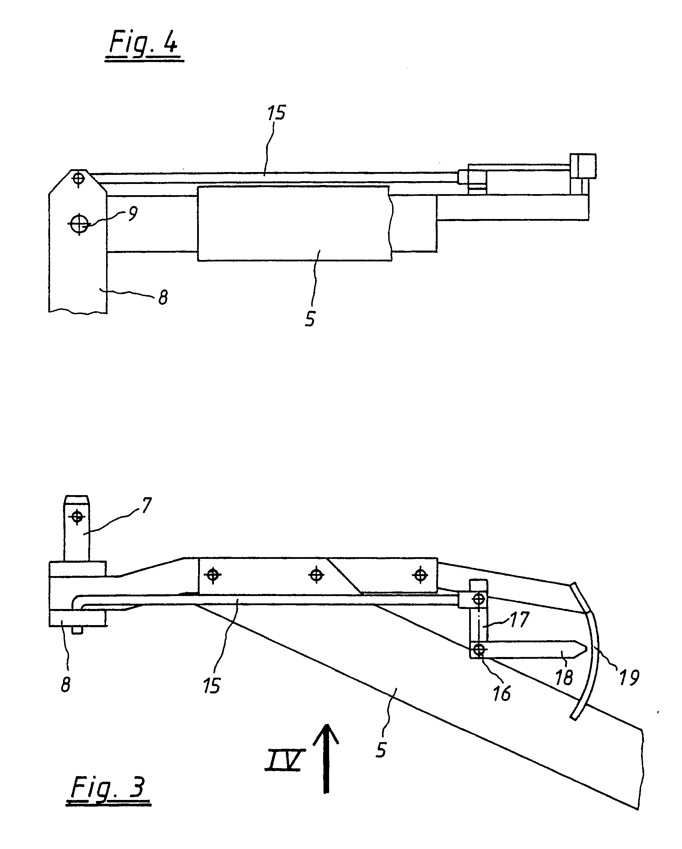

In den Figuren 3 und 4 ist eine einfache und zweckmäßige Anordnung dargestellt, mit der die jeweilige Stellung der Hebel 8 bzw. die Verstellung des vorderen Deichselteiles 5 in einer der Richtungen des Doppelpfeiles P (vgl. Fig. 2) angezeigt werden kann.

Gemäß Fig. 4 ist einer der Hebel 8 als doppelarmiger Hebel ausgebildet, wobei am in Fig. 4 oberen Hebelarm eine Stange 15 angelenkt ist, deren anderes Ende gelenkig mit einem um eine vertikale Achse 16 schwenkbaren Hebel 17 verbunden ist. Am Hebel 17 ist ein Zeiger 18 fest angeordnet, welcher mit einer Skala 19 zusammenwirkt. Zeiger 18 und Skala 19 sind hinreichend groß angeordnet, so daß die Stellung des Zeigers 18 bezüglich der Skala 19 vom Zugfahrzeug aus abgelesen werden kann.

Die Elemente 15 bis 19 sind im wesentlichen außerhalb der V-Öffnung des vorderen Deichselteiles 5 angeordnet, um zwischen den V-Schenkeln des vorderen Deichselteiles 5 hinreichend Raum für die Durchführung einer Zapfwelle 20 (vgl. Fig. 1) zu haben, welche eine Pumpe 21 des Feldspritzgerätes 1 antriebsmäßig mit einem nicht dargestellten Zapfwellenanschluß des Zugfahrzeuges bzw. Schleppers verbindet.

Gegebenenfalls kann der Schwenkbereich der Hebelarme 8 durch entfernbare bzw. verstellbare Anschläge direkt oder indirekt begrenzt werden.

In zweckmäßiger Weise können die Anschläge dabei mit dem doppelarmigen Hebel 11 zusammenwirken, wie es in den Figuren 1 und 2 dargestellt ist. An den Schenkeln des vorderen Deichselteiles 5 sind Halter bzw. Aufnahmen 22 für Steckbolzen 23 angeordnet, welche sich aus einer in Fig. 1 dargestellten unwirksamen Lage nach unten in eine wirksame Lage schieben lassen, in der die unteren Enden der Steckbolzen 23 mit den Armen des Hebels 11 anschlagartig zusammenwirken.

Auf diese Weise kann der Schwenkbereich des Hebels 11 beispielsweise halbiert werden.

Durch entsprechende Anordnung der Anschläge bzw. der Steckbolzen 23 kann eine häufig benötigte Stellung der Hebel 8 bzw. 11 vorgesehen werden. Diese Stellung läßt sich dann vereinfacht erreichen, indem das Stellaggregat 14 betätigt wird, bis die Bewegung der Hebel 8 bzw. 11 durch die Anschläge bzw. Steckbolzen begrenzt wird, d.h. die Größe des Schwenkhubes braucht nicht besonders überwacht zu werden.

Grundsätzlich ist auch die "kinematisch umgekehrte" Anordnung denkbar, bei der die Hebel 8, die Schubstangen 10, der Hebel 11 sowie das Kolben-Zylinder-Aggregat 14 usw. an den Unterlenkern 6 des Zugfahrzeuges bzw. Schleppers angeordnet sind, um zugfahrzeugseitige bzw. schlepperseitige Kupplungselemente, welche in diesem Falle an den Hebeln 8 anzuordnen sind, in Fahrzeuglängsrichtung bewegen zu können. Damit brauchen an den Vorderenden des Deichselteiles 5 lediglich feststehende Gegenkupplungselemente

angeordnet zu werden.

## Ansprüche

1. Kupplungsvorrichtung zum Ankuppeln geschleppter Geräte bzw. Fahrzeuge - insbesondere solcher für die Landwirtschaft, wie z.B. Feldspritzen - an Zugfahrzeuge bzw. Schlepper, mit einer zwischen Zugfahrzeug bzw. Schlepper und geschlepptem Gerät bzw. Fahrzeug angeordneten Deichsel, welche relativ zum Zugfahrzeug in Querrichtung verstellbar ist,
dadurch gekennzeichnet,
daß die Deichsel (4,5) einen vorderen, in Draufsicht U- bzw. V-förmigen Teil (5) besitzt, welcher mit einem am geschleppten Fahrzeug bzw. Gerät (1) angeordneten hinteren Teil (4) um eine Längs- sowie eine Hochachse (L,H) drehbar verbunden ist und dessen U- bzw. V-Schenkel um eine Querachse (U) schwenkbar mit Anschlußpunkten (Unterlenker 6) des Zugfahrzeuges bzw. Schleppers kuppelbar sind, und
daß zumindest einer der deichselseitigen Gegenanschlußpunkte (7) in Längsrichtung (R,V) verstellbar ist.

2. Kupplungsvorrichtung nach Anspruch 1, dadurch gekennzeichnet, daß der verstellbare Gegenanschlußpunkt (7) vom Fahrerplatz des Zugfahrzeuges bzw. Schleppers aus fernsteuerbar ist.

3. Kupplungsvorrichtung nach einem der Ansprüche 1 bis 3, dadurch gekennzeichnet, daß beide deichselseitigen Gegenanschlußpunkte (7) verstellbar und miteinander gegenläufig gekoppelt sind.

4. Kupplungsvorrichtung nach einem der Ansprüche 1 bis 4, dadurch gekennzeichnet, daß jeder Gegenanschlußpunkt (7) an einem Hebelarm (8) angeordnet ist, der an einem der zugfahrzeugseitigen Enden des vorderen Deichselteiles (5) um eine Querachse (9) schwenkverstellbar angeordnet ist.

5. Kupplungsvorrichtung nach Anspruch 5, dadurch gekennzeichnet, daß die Hebelarme (8) über an ihnen angelenkte Stangen (10) mit einem doppelarmigen Hebel (11) verbunden sind, welcher im Verbindungsbereich der V- bzw. U-Schenkel des vorderen Deichselteiles (5) angeordnet ist.

6. Kupplungsvorrichtung nach Anspruch 6, dadurch gekennzeichnet, daß der doppelarmige Hebel (11) mittels eines doppeltwirkenden Kolben-Zylinder-Aggregates (14) vom Zugfahrzeug bzw. Schlepper aus steuerbar verstellbar ist.

7. Kupplungsvorrichtung nach einem der Ansprüche 1 bis 7, dadurch gekennzeichnet, daß an der Deichsel (4,5) eine Anzeigevorrichtung (18,19) angeordnet ist, welche die jeweilige Einstellung der Deichsel (4,5) vom Fahrerplatz des Zugfahrzeuges bzw. Schleppers aus sichtbar anzeigt.

8. Kupplungsvorrichtung zum Ankuppeln geschleppter Geräte bzw. Fahrzeuge - insbesondere solcher für die Landwirtschaft, wie z.B. Feldspritzen - an Zugfahrzeuge bzw. Schlepper, mit einer zwischen Zugfahrzeug bzw. Schlepper und geschlepptem Gerät bzw. Fahrzeug angeordneten Deichsel, welche relativ zum Zugfahrzeug in Querrichtung verstellbar ist,
dadurch gekennzeichnet,
daß die Deichsel (4,5) einen vorderen, in Draufsicht U- bzw. V-förmigen Teil (5) besitzt, welcher mit einem am geschleppten Fahrzeug bzw. Gerät (1) angeordneten hinteren Teil (4) um eine Längs- sowie eine Hochachse (L,H) drehbar verbunden ist und dessen U- bzw. V-Schenkel um eine Querachse (U) schwenkbar mit Anschlußpunkten (Unterlenker 6) des Zugfahrzeuges bzw. Schleppers kuppelbar sind, und
daß zumindest einer der Anschlußpunkte in Längsrichtung relativ zum Schlepper bzw. Zugfahrzeug verstellbar ist.

Fig. 1

Fig. 2

Fig. 4

15

9

8

5

Fig. 3

7

8

15

17

16

18

19

5

_IV_